# EUROPÄISCHE PATENTSCHRIFT

(11) **EP 0 664 596 B1**
(45) Veröffentlichungstag und Bekanntmachung des Hinweises auf die Patenterteilung: **08.07.1998**
(21) Anmeldenummer: 95100210.4
(22) Anmeldetag: 09.01.1995
(51) Int. Cl.: H02J 1/10, H02M 3/28

(54) **Stromsymmetrierungsschaltung**
Device for the symmetrisation of currents
Dispositif pour maintenir la symétrie des courants

(30) Priorität: 21.01.1994 DE 4401728
(43) Veröffentlichungstag der Anmeldung: 26.07.1995
(73) Patentinhaber: Siemens Nixdorf Informationssysteme AG, 33106 Paderborn (DE)
(72) Erfinder: Pollmeier, Werner, D-33415 Verl (DE)
(74) Vertreter: Epping, Wilhelm, Dr.-Ing.

(56) Entgegenhaltungen:
- DE-A- 3 020 899
- DE-A- 3 932 437
- GB-A- 2 203 868
- US-A- 5 122 726
- US-A- 5 157 269
- US-A- 5 164 890

## Beschreibung

### Technisches Gebiet

Die Erfindung betrifft eine Parallelschaltung mehrerer Stromversorgungen auf eine gemeinsame Last.

### Stand der Technik

Zur Versorgung von Geräten mit stabilisierten Kleinspannungen bei hohem Strombedarf, beispielsweise Datenverarbeitungsanlagen, ist es wünschenswert, mehrere Stromversorgungen, insbesondere Netzteile, parallel schalten zu können. Hierbei ist eine gleichmäßige Aufteilung der Ströme auf alle angeschlossenen Stromversorgungen wünschenswert. Dabei wird, wie in der US Patentschrift 5164890 beschrieben ist, zusätzlich zu der Regelung der Ausgangsspannung nach einer Referenzspannung ein Strommittelwert gebildet und eine Feinregelung der Ausgangsspannung in der Form durchgeführt, daß der jeweilige Ausgangsstrom in etwa gleich dem Strommittelwert ist.

Innerhalb des Bereichs der Feinregelung verhält sich die Stromversorgung wie eine Stromquelle. Parallelgeschaltete Stromquellen neigen jedoch zu instabilen Ausgangsspannungen insbesondere bei nicht-ohmschen Lasten. Die Ausgangsspannung wird vom Verhältnis der Innenwiderstände bestimmt, die beispielsweise durch thermische Ursachen schwanken. Daher muß für stabile Betriebsverhältnisse eine der Stromversorgungen als Master geschaltet und ohne die Stromregelung betrieben werden, aber bei der Bildung des Strommittelwertes beitragen. Der Master gibt also die Spannung vor und übernimmt die Differenz zwischen dem von dem Verbraucher aufgenommenen und dem von den anderen Stromversorgungen gelieferten Strom. Durch die Sonderstellung des Masters wird gleichzeitig erreicht, daß die Ausgangsspanung der parallelgeschalteten Netzteile im wesentlichen nur durch die Toleranz der Ausgangsspannung des Master-Netzteils bestimmt ist.

Insbesondere Netzteile der Computertechnik müssen kleine Ausgangsspannungen von 5V oder 3,3V bei geringen Toleranzen bereitstellen. Beträgt beispielsweise die Toleranz der Referenzspannung der Netzteile ±1% vom Sollwert, dann muß die Stromregelung einen Regelbereich von mindestens ±2% umfassen, um auch bei ungünstiger Kombination der Referenzspannungen im Regelbereich zu bleiben. Da die Ausgangsspannung vom Master-Netzteil bestimmt wird, ist die Toleranz der Ausgangsspannung der Parallelschaltung dieselbe wie die Toleranz der Leerlaufspannung des Master-Netzteils, nämlich ±1%. Hingegen ist die Toleranz der Leerlaufspannung eines Slave-Netzteils zusammengesetzt aus der Toleranz der Referenzspannung von z.B. ±1% und der durch den notwendigen doppelten Regelbereich vorgegebenen Spanne von ±2%, so daß die Leerlaufspannung der Slave-Netzteile um ±3% vom Nennwert schwanken kann. Auch wegen der sich damit ergebenden dreifach größeren Toleranz der Ausgangsspannung ist daher ein einfaches Zusammenschalten von Netzteilen ohne Master-Slave-Anordnung problematisch.

Die Spezialisierung eines Netzteils als Masternetzteil ist jedoch nicht wünschenswert. Insbesondere kann bei hohen Anforderung an die Verfügbarkeit der Stromversorgung die Anzahl der Netzteile so gewählt werden, daß bei Ausfall eines der Netzteile die restlichen den Strombedarf decken können. Ein Masternetzteil würde die vollständige Ausfallsicherheit gegen Ausfall eines einzigen Netzteils verhindern.

Es ist daher Aufgabe der Erfindung, die Zusammenschaltung von Stromversorgungen mit Stromausgleich so zu gestalten, daß trotz Verzichts auf eine Master-Stromversorgung eine stabile Ausgangsspannung und eine einer Schaltung mit Master vergleichbare Genauigkeit der Ausgangsspannung erreicht wird.

### Darstellung der Erfindung

Zur Lösung dieser Aufgabe gelangt man über die Erkenntnis, daß immer eines der parallelgeschalteten Netzteile eine Masterfunktion übernehmen sollte. Um die Masterfunktion übernehmen zu können, muß dieses Netzteil als Konstantspannungsquelle und die restlichen als gesteuerte Stromquellen wirken. Die Lösung besteht darin, durch eine Vorspannung in der Teilschaltung zum Stromvergleich dafür zu sorgen, daß die Leerlaufspannung der Netzteile an der Untergrenze des Regelbereichs liegt. Dann hat das Netzteil mit der innerhalb der Streuung der Referenzspannungen höchsten Referenzspannung die höchste Leerlauf-Ausgangsspannung und übernimmt die Masterfunktion. Anders formuliert besteht die Erfindung darin, durch eine Vorspannung im Regelverstärker im Leerlauf keinen hohen, sondern einen geringen Ausgangswiderstand zu erreichen, indem der Verstärker U2 in Sättigung gelangt und eine stabile, nahe einer Betriebsspannung liegende Ausgangsspannung erzeugt, so daß der Widerstand R2 ohne Wirkung ist. Dieser Betriebszustand gilt dann auch für das sich jeweils als Master einstellende Netzteil. Die anderen Netzteile regeln im Rahmen der Feinregelung für den Stromausgleich zu höherer als der jeweiligen Leerlaufspannung. Durch die Vorspannung bedarf es für das als Master fungierende Netzteil einer signifikanten, vorherbestimmbaren Abweichung des Ausgangsstroms vom dem durch einen Widerstandsstern bestimmten Mittelwert der Ausgangsströme, so daß dieses Netzteil als Konstantspannungsquelle fungiert. Diese Schaltung bewirkt, daß das als Master fungierende Netzteil den höchsten Strom aller Netzteile liefert. Gleichzeitig wird eine geringe Toleranz der sich ergebenden gemeinsamen Ausgangsspannung erreicht, die wie bei fest zugeordnetem Master im wesentlichen die Toleranz der Referenzspannung beträgt. Der Regelbereich für die Feinregelung ist nur noch die einfache Toleranz der Referenzspannung, da jedes Netzteil nur noch zu höheren Ausgangsspannungen hin geregelt werden muß.

### Kurzbeschreibung der Zeichnungen

Es zeigen
- Fig. 1: eine Zusammenschaltung von stark vereinfacht dargestellten erfindungsgemäßen Stromversorgungen,
- Fig. 2: eine beispielhafte Ausführungsform einer einzelnen Stromversorgung,
- Fig. 3: ein Modell für das Verhalten einer einzelnen Stromversorgung.

### Detaillierte Beschreibung der Erfindung

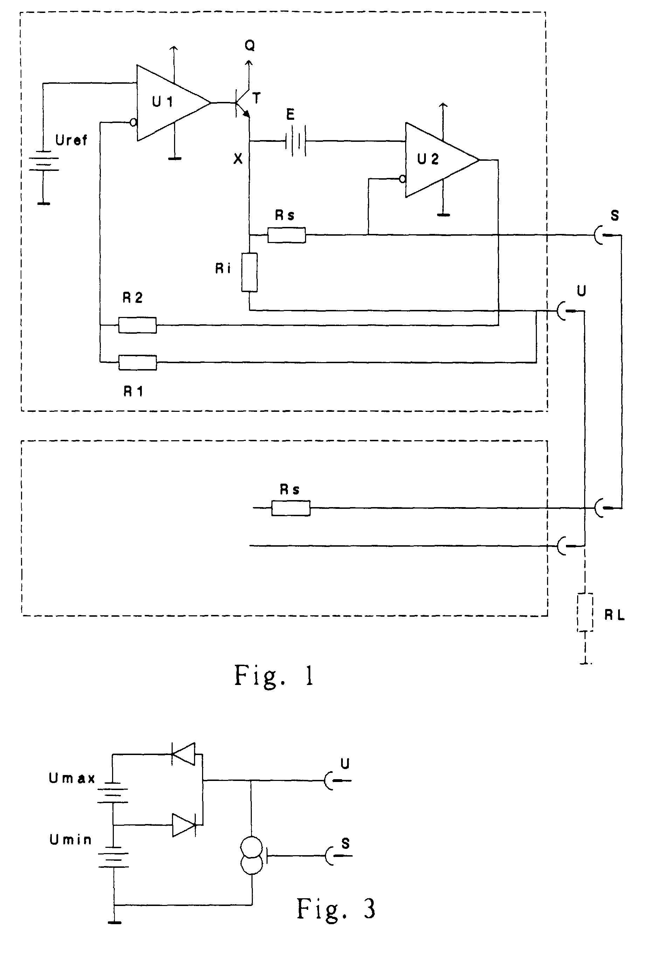

In der Fig. 1 ist eine vereinfachte Schaltung dargestellt, um das Zusammenwirken mehrerer Stromversorgungen zu beschreiben. Die umrahmte Schaltung zeigt eine von mehreren Stromversorgungen, die an dem Punkt U parallel zueinander verbunden sind und eine als gestrichelt dargestellte gemeinsame Last RL speisen. Die Versorgung mit elektrischer Energie erfolgt am Punkt Q durch bekannte Mittel. Mit dem Punkt Q ist ein elektronisches Steuerglied T verbunden, welches durch den Operationsverstärker U1 angesteuert wird. Das Steuerglied kann auch in die Versorgung Q integriert sein, wenn beispielsweise diese aus einem Schaltspannungswandler besteht, bei dem die abgegebene Energie und damit die Ausgangsspannung durch Änderung des Tastverhältnisses eingestellt wird. Die so gesteuerte Energie wird über den Strommeßwiderstand Ri an den Punkt U geführt. Von dem Punkt U wird über einen Widerstand R1 der Istwert der Ausgangsspannung an den invertierenden Eingang des Operationsverstärkers U1 geführt, dessen nicht-invertierender Eingang mit einer Referenzspannungsquelle Uref verbunden ist.

An dem Strommeßwiderstand Ri entsteht eine Spannung, die, gegenüber U gemessen, proportional dem von dem Netzteil gelieferten Strom ist. Über den Widerstand Rs wird dieser den Ausgangsstrom repräsentierende Istwert auf einen Sternpunkt S geführt, an dem die zweite gemeinsame Verbindung aller zusammengeschalteten Stromversorgungen erfolgt. Die Spannung an dem Punkt S, gegenüber U gemessen, repräsentiert den Strommittelwert, gemittelt über alle Netzteile.

Der Stromausgleich erfolgt über den Operationsverstärker U2. Zunächst sei angenommen, daß die Spannung der Spannungsquelle E 0V betrage; E kann also durch eine Verbindung ersetzt gedacht werden. Die Ausgangsspannung von U2 ist positiv gegenüber X, wenn der von der Stromversorgung gelieferte Strom über dem Mittelwert liegt, und negativ, wenn er darunter liegt. Die Ausgangsspannung von U2 wird über den Widerstand R2 zusätzlich zu dem Widerstand R1 an den invertierenden Eingang des Operationsverstärkers U1 gelegt. Damit wird eine Feinregelung der Ausgangsspannung erreicht, so daß die Abweichung des Ausgangsstroms zum Mittelwert des Stroms aller Stromversorgungen gering wird. R2 ist erheblich größer als R1 und legt den Schwankungsbereich der Ausgangsspannung fest, innerhalb derer die Stromregelung wirksam ist. Ist U2 vollständig durchgesteuert, liegt also seine Ausgangsspannung bei der negativen oder positiven Versorgungsspannung, dann ist die Stromregelung unwirksam und der Ausgang bei U verhält sich wie eine Spannungsquelle geringen Innenwiderstands. In Fig. 3 ist dieses Verhalten symbolisch dargestellt: Umin und Umax sind die durch das Verhältnis von R1 und R2 sowie den Ausgangs-Aussteuerungsbereich von U2 vorgegebenen Grenzen des Strombetriebs. Die Dioden sind als ideale Dioden aufzufassen; sie klemmen die Ausgangsspannung an die beiden Spannungen Umin und Umax. Die Stromquelle wird von dem Eingang S gesteuert.

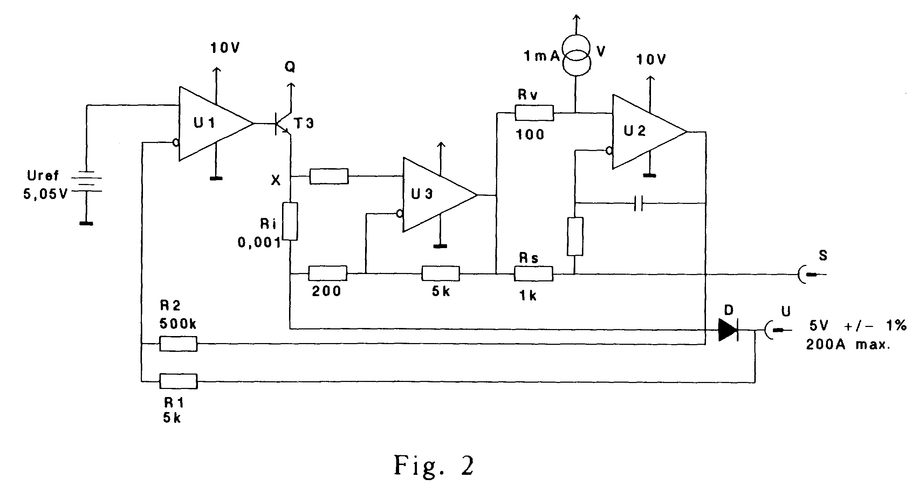

Fig. 2 zeigt eine Ausführungsform mit weiteren Details. Hierbei wird die Spannung am Strommeßwiderstand Ri mit dem Verstärker U3 verstärkt und diese so verstärkte Spannung zur Mittelwertbildung mittels Rs verwendet. Die Zeichnung enthält Angaben zu den Werten der Bauelemente, die lediglich als Beispiele zu betrachten sind. Durch die Verstärkung mit U3 kann am Ausgang eine Entkoppeldiode D eingefügt werden, ohne daß die Funktion beeinträchtigt wird. An den Eingängen der Verstärker sind Schutzwiderstände entsprechend erprobter Praxis angebracht. Der Verstärker U2 ist durch einen Kondensator vom Ausgang zum invertierenden Eingang gedämpft. Die Vorspannung wird an dem Schutzwiderstand Rv zwischen dem Ausgang von U3 und dem nicht-invertierenden Eingang von U2 erzeugt, indem eine Stromquelle V einen Strom einspeist, so daß der nicht-invertierende Eingang von U2 positiv gegenüber dem Ausgang von U3 ist und die Ausgangsspannung U auf Minimum gezogen wird. Die Vorspannung ist größer als die Offsetspannung des Verstäkers U2. Das Verhältnis der Widerstände R1 und R2 bestimmt mit dem Ausgangsspannungshub von U2 den Feinregelbereich, der im gezeigten Fall 2% beträgt, da der Hub von U2 von 0 bis 10V reicht. Dabei wird angenommen, daß die Referenzspannungsquellen Uref zusammen mit den restlichen Toleranzen der Schaltung eine Genauigkeit von ± 1% besitzen, also zwischen 4,95V und 5,05V für einen Nominalwert von 5V schwanken können. Die Ausgangsspannung im Leerlauf liegt dann zwischen 4,90 und 5,00 Volt, da der Feinregelbereich ±0,05V beträgt. Da sich die Parallelschaltung durch die Vorspannung auf das Minimum des Netzteils mit der höchsten Referenzspannung einstellt, muß die Referenzspannung als nominal 5.05V eingestellt werden, so daß die Leerlaufspannung zwischen 4.95 und 5.05 liegt.

Anstelle des Minimums kann als Extremum auch das Maximum gewählt und die Referenzspannung entsprechend eingestellt werden.

Für die Vorspannungserzeugung wird vorzugsweise die in Fig.2 gezeigte Wirkung einer Stromquelle V auf einen Schutzwiderstand Rv eingesetzt, wobei die Stromquelle V auch durch einen Widerstand angenähert realisiert werden kann. Bei Verwendung von Operationsverstärkern mit Anschlüssen zur Offsetspannungskompensation, wie z.B. der von vielen Herstellern lieferbare Typ 741, kann einer der beiden Anschlüsse mit der negativen Versorgungsspannung verbunden werden, um eine Offsetspannung definierter Richtung zu erzeugen. Laut Datenblatt des Typs LM741 der Firma National Semiconductor beträgt die Offsetspannung maximal 5mV, der Bereich der Offsetspannungskompensation hingegen ±15mV, so daß eine sichere Vorspannung von 10mV erreicht wird.

Fällt ein Netzteil aus, so trennt eine nicht dargestellte innere Überwachungs- und Schutzschaltung das Netzteil beispielsweise durch einen Relaiskontakt vom Sternpunkt S und schaltet die Versorgung mit elektrischer Energie am Punkt Q ab. Ist es das als Master fungierende Netzteil, so sinkt die Spannung an der Last um ein Geringes, da jetzt das Netzteil mit der höchsten verbleibenden Referenzspannung die Masterfunktion übernimmt. Ist es nicht das Master-Netzteil, so bleibt die Spannung. In beiden Fällen übernehmen die verbleibenden Netzteile zusammen den Strom des ausgefallenen Netzteils.

Auch ohne die Abschaltung eines ausgefallenen Netzteils bliebt die Anordnung funktionsfähig. Bei Ausfall des Masternetzteils übernimmt das Netzteil mit dem nächst höheren Spannungswert die Masterfunktion. Durch den Ausfall eines Netzteils wird die Stromsymmetrie gestört. Das vorhandene oder sich neu bildende Masternetzteil übernimmt zusätzlich den Strom des ausgefallenen Netzteils, jedoch maximal bis zur eigenen, zusätzlich vorhandenen Strombegrenzung. Sofern diese erreicht wird, wirkt das Netzteil als Stromquelle, und von den verbleibenden Netzteilen übernimmt eines die Masterfunktion. Dieser Zustand kann auch über längere Zeitdauer, z.B. bis zum Eintreffen von Wartungspersonal, bestehen, ohne das die Stromversorgung als ganzes unterbrochen ist.

## Patentansprüche

1. Parallelschaltung von mindestens zwei in ihrer Abgabeleistung regelbaren Stromversorgungen an eine gemeinsame Last mit folgenden Merkmalen:
- Teilschaltungen (U₁, T, T₃) zur Regelung der Abgabeleistung auf minimale Abweichung zwischen Spannung an der Last und einer jeweiligen Referenzspannung
- Teilschaltungen (Ri) zur Bestimmung eines jeweiligen Ausgangsstroms
- Teilschaltung (Ri,Rs,S) zur Bildung eines gemeinsamen Strommittelwerts aus den jeweiligen Ausgangsströmen
- Teilschaltungen (U₂) zur Bildung einer Differenz zwischen jeweiligem Ausgangsstrom und gemeinsamem Strommittelwert
- Zuführung der Differenz zu der Teilschaltung zur Regelung der Abgabeleistung, so daß die Spannung an der Last innerhalb eines vorgegebenen Feinregelbereichs der Ausgangsspannung verändert wird, um die Differenz zu minimieren
gekennzeichnet durch
- Vorspannmittel (E, Rv, V) zur Beeinflussung der Teilschaltung zur Bildung der Differenz in der Art, daß bei Gleichheit von Ausgangsstrom und Strommittelwert die Ausgangsspannung der Stromversorgungen für alle Stromversorgungen dasselbe Extremum des Feinregelbereichs, insbesondere das Minimum, annimmt.

2. Schaltung nach Anspruch 1, wobei der absolute Betrag des Feinregelbereichs gleich dem absoluten Betrag der Toleranz der Referenzspannung unter Einschluß sonstiger Toleranzen ist und der Nominalwert der Referenzspannung der obere Wert des vorgegebenen Toleranzbereichs der Ausgangsspannungen der parallelgeschalteten Stromversorgungen ist, wenn als Extremum das Minimum verwendet wird, und der untere Wert ist, wenn als Extremum das Maximum verwendet wird.

3. Schaltung nach Anspruch 1, wobei die Vorspannung die maximal zulässige Offsetspannung in der Teilschaltung zur Stromregelung übersteigt.

4. Schaltung nach Anspruch 1, wobei in der Teilschaltung zur Stromregelung integrierte Verstärkerschaltungen mit Anschlüssen zur externen Kompensation der Offsetspannung verwendet werden und diese so beschaltet werden, daß eine maximale, einseitig die Ausgangsspannung in Richtung auf das gewählte Extremum beeinflussende Offsetspannung entsteht.

5. Schaltung nach einem der vorangehenden Ansprüche, wobei bei Ausfall einer Stromversorgung diese sowohl von der gemeinsamen Last als auch von der Teilschaltung zur Bildung des Strommittelwertes abgekoppelt wird.

## Claims

1. Parallel circuit of at least two power supply units which can have their output power controlled and are connected to a common load, having the following features:
- component circuits (U1, T, T3) for controlling the output power to a minimum deviation between the voltage across the load and the respective reference voltage,
- component circuits (Ri) for determining a respective output current,
- component circuit (Ri, Rs, S) for forming a common mean current value from the respective output currents,
- component circuits (U2) for forming a difference between the respective output current and the common mean current value, and
- feeding the difference to the component circuit for controlling the output power so that the voltage across the load is varied within a prescribed fine control range of the output voltage, in order to minimize the difference,
characterized by
- biasing means (E, Rv, V) for influencing the component circuit to form the difference in such a way that when the output current and mean current value are equal the output voltage of the power supply units assumes the same extreme value of the fine control range, in particular the minimum, for all power supply units.

2. Circuit according to Claim 1, the absolute value of the fine control range being equal to the absolute value of the tolerance of the reference voltage with the inclusion of other tolerances, and the nominal value of the reference voltage being the upper value of the prescribed tolerance range of the output voltages of the parallel-connected power supply units when the minimum is used as the extreme value, and being the lower value when the maximum is used as the extreme value.

3. Circuit according to Claim 1, the biasing exceeding the maximum permissible offset voltage in the component circuit for controlling the current.

4. Circuit according to Claim 1, amplifier circuits which are integrated in the component circuit for current control and have terminals for external compensation of the offset voltage being used and being wired up in such a way as to produce a maximum offset voltage which influences the output voltage unilaterally in the direction of the selected extreme.

5. Circuit according to one of the preceding claims, in the case of failure of a power supply unit the latter being decoupled both from the common load and from the component circuit for forming the mean current value.

## Revendications

1. Circuit parallèle d'au moins deux alimentations en courant, dont les puissances de sortie peuvent être réglées, sur une charge commune, ayant les caractéristiques suivantes :
- des circuits partiels (U1, T, T3) pour réguler la puissance de sortie sur un écart minimal entre la tension à la charge et une tension de référence,
- des circuits partiels (Ri) pour déterminer un courant de sortie,
- un circuit partiel (Ri, Rs, S) pour former une moyenne commune des courants à partir des courants de sortie,
- des circuits partiels (U2) pour former une différence entre un courant de sortie et la moyenne commune des courants,
- un envoi de la différence au circuit partiel destiné à la régulation de la puissance de sortie, de telle sorte que la tension à la charge varie à l'intérieur d'une plage de régulation précise prescrite de la tension de sortie afin de minimiser la différence,
caractérisé par
- des moyens (E, Rv, U2) formant une tension initiale pour influencer le circuit partiel destiné à former la différence de telle sorte que, en cas d'égalité du courant de sortie et de la moyenne des courants, la tension de sortie des alimentations en courant prend pour toutes les alimentations en courant le même extremum de la plage de régulation précise, notamment le minimum.

2. Circuit selon la revendication 1, la valeur absolue de la plage de régulation précise étant égale à la valeur absolue de la tolérance de la tension de référence y compris d'autres tolérances et la valeur nominale de la tension de référence étant la valeur supérieure de la plage de tolérance prescrite des tensions de sortie des alimentations en courant branchées en parallèle si le minimum est utilisé comme extremum ou la valeur inférieure si le maximum est utilisé comme extremum.

3. Circuit selon la revendication 1, la tension initiale dépassant la tension offset maximale autorisée dans le circuit partiel destiné à la régulation de courant.

4. Circuit selon la revendication 1, le circuit partiel destiné à la régulation de courant utilisant des circuits amplificateurs intégrés ayant des bornes destinées à la compensation externe de la tension offset et ces bornes étant branchées de telle sorte qu'il apparaît une tension offset maximale influençant d'un seul côté la tension de sortie dans le sens de l'extremum choisi.

5. Circuit selon l'une des revendications précédentes, une alimentation en courant, lorsqu'elle tombe en panne, étant séparée aussi bien de la charge commune que du circuit partiel destiné à former la moyenne des courants.
